(19) Europäisches Patentamt
European Patent Office
Office européen des brevets

(11) Publication number: **0 301 543 B1**

(12) **EUROPEAN PATENT SPECIFICATION**

(45) Date of publication of patent specification: **08.02.95**

(51) Int. Cl.[6]: **C08L 79/08**, C08L 23/00, C08L 27/12, H01B 3/30

(21) Application number: **88112237.8**

(22) Date of filing: **28.07.88**

(54) **Molded article made from a resinous composition.**

(30) Priority: **29.07.87 JP 191137/87**
**29.07.87 JP 191138/87**

(43) Date of publication of application:
**01.02.89 Bulletin 89/05**

(45) Publication of the grant of the patent:
**08.02.95 Bulletin 95/06**

(84) Designated Contracting States:
**BE DE FR GB NL**

(56) References cited:
**EP-A- 0 103 487**
**EP-A- 0 120 130**
**EP-A- 0 126 781**
**EP-A- 0 186 155**
**EP-A- 0 251 741**

**PATENT ABSTRACTS OF JAPAN, vol. 9, no. 166 (C-290)(1889), 11 July 1985, & JP-A-60 038464**

(73) Proprietor: **SUMITOMO ELECTRIC INDUSTRIES LIMITED**
**No. 15, Kitahama 5-chome,**
**Higashi-ku**
**Osaka-shi,**
**Osaka 541 (JP)**

(72) Inventor: **Sakamoto, Yoshito c/o Osaka Works of**
**Sumitomo Electric Industries, Ltd.**
**1-3, Shimaya**
**1-chome**
**Konohana-ku**
**Osaka-shi**
**Osaka-fu (JP)**

(74) Representative: **Hansen, Bernd, Dr.rer.nat. et al**
**Hoffmann, Eitle & Partner**
**Patentanwälte**
**Postfach 81 04 20**
**D-81904 München (DE)**

**EP 0 301 543 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### Field of the Invention

The present invention relates to a molded article. More particularly, the present invention relates to a molded article made of a heat and abrasion resistant resinous composition comprising a specific polyetherimide and at least one fluororesin, and an abrasion resistant insulated wire having a insulating coating of such resinous composition.

#### Description of the Related Art

Many molded resin articles and insulated wires are used in various fields such as communication equipments, automobiles, aircrafts and the like.

Resins to be used for molding such articles include general-purpose resins (e.g. polyethylene, polypropylene, polystyrene and the like) and general-purpose engineering plastics which have better heat resistance and mechanical strength than the general-purpose resins (e.g. polyamide, polyacetal, modified polyphenyleneoxide and the like).

In these fields, since parts are required to be lightened and made compact, the molded resin articles should be made smaller and lighter. As the molded article is made lighter and smaller, its wall becomes very thin. Therefore, it is necessary to use a resin having a better tensile strength at break and abrasion resistance than the conventionally used resins. Particularly, since the abrasion resistance greatly depends on the thickness of the resin, it is highly desired to provide a resin having excellent abrasion resistance.

The insulated wires to be used in the above fields are required to be thin on one hand, and requirements for safety of the insulated wires become strict on the other hand. Therefore, it is required to provide an insulated wire which is thinner but has better mechanical strength, heat resistance and flame retardance than the conventional insulated wires. To satisfy such requirement, developed is an insulated wire having an insulating layer made of an ethylene-tetrafluoroethylene copolymer. Although such insulated wire has excellent heat resistance, it has poor abrasion resistance. Polyetherimide, which is one of the engineering plastics, has the best abrasion resistance among the resins and good heat resistance, but its flexibility is not good enough to be used as an insulating material of the insulated wire.

EP-A-0126781 discloses a composition comprising a blend of (a) a polyetherimide and (b) a fluorinated polyolefin or copolymer thereof; this composition is used as an insulation material for coils and cable wrappings.

EP-A-0186155 discloses a bearing composition consisting essentially of a polyetherimide resin and from about 8 % to about 12 % per weight of a fluoropolymer.

EP-A-0120130 refers to a bearing composition which comprises a polyetherimide resin together with a fluoropolymer and a lubricating agent, and optionally a reinforcing agent, e.g. glass fibers, carbon fibers or glass beads.

### SUMMARY OF THE INVENTION

One object of the present invention is to provide a molded article made of a resinous composition having good abrasion resistance and heat resistance.

Another object of the present invention is to provide an insulated wire having good abrasion resistance and heat resistance.

These and other objects are accomplished by a molded article made of a resinous composition comprising a polyetherimide which comprises repeating units of the formula:

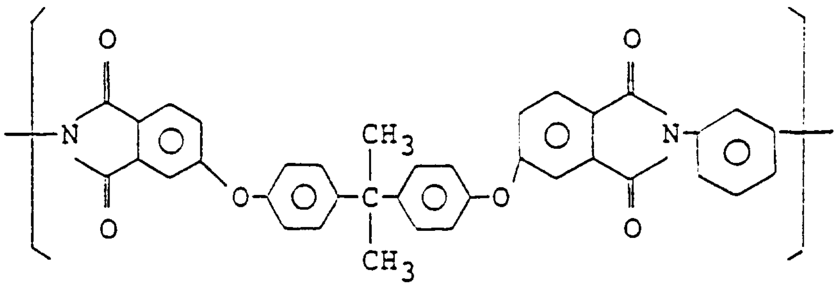

(I)

and at least one fluororesin selected from the group consisting of ethylene-tetrafluoroethylene copolymers (hereinafter referred to as "ETFE"), ethylene-chlorotrifluoroethylene copolymers (hereinafter referred to as "ECTFE"), tetrafluoroethylene-hexafluoropropylene copolymers (hereinafter referred to as "FEP"), polychlorotrifluoroethylene (hereinafter referred to as "CTFE") and tetrafluoroethyleneperfluoroalkyl vinyl ether copolymers (hereinafter referred to as "PFA"), and an insulated wire comprising a conductor and an insulating coating made of said resinous composition.

Subject matter of the present invention is a molded article according to claim 1, and an insulated wire according to claim 2.

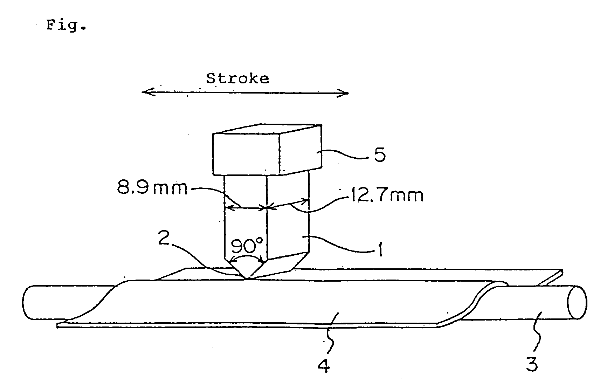

## BRIEF DESCRIPTION OF THE DRAWING

Figure schematically shows a rubbing abrasion test method.

## DETAILED DESCRIPTION OF THE INVENTION

The polyetherimide used according to the present invention has excellent abrasion resistance and exhibits the best result in a rubbing abrasion test by using a wedge shaped metal edge among the commercially available resins.

In the present specification, the abrasion resistance is evaluated by placing a sheet of a resin or resinous composition having a thickness of 0.2 mm on a metal rod having a diameter of 0.8 mm or coating a conductor having a diameter of 0.8 mm with a coating of a resin or resinous composition having a thickness of 0.2 mm and then rubbing the surface of the resinous sheet or coating with the wedge shaped metal edge under a load of 1.4 kg at a constant rate (30 strokes/min.) and a constant stroke (50 mm). The abrasion resistance is expressed in terms of the number of strokes till the sheet or coating is broken. A testing apparatus is schematically shown in Figure, in which numeral 1 stands for an edge made of tungsten carbide, 2 stands for an edge tip having a diameter of 0.13 mm, 3 stands for a metal rod having a diameter of 0.8 mm, 4 stands for a resinous sheet and 5 stands for a loading weight (a total weight of the edge and the loading weight being 1.4 kg). In case of the insulated wire, the sheet and rod are replaced with the insulated wire.

In this test, when the polyetherimide alone is used, the number of strokes is less than 100, and when the fluororesin which is used as a component of the composition according to the present invention is used alone, the best result is obtained for ETFE and the number of strokes is only 20 to 30.

On the contrary, when the composition of the polyetherimide with one of ETFE, ECTFE, FEP, CTFE and PFA is used, the number of strokes is more than 100, which is better than the polyetherimide alone or the fluororesin alone.

Hitherto, no combination of two or more resins has been reported to have better abrasion resistance than a single resin in the above abrasion test.

The resinous composition according to the present invention can be cross linked by irradiation of the ionizing radiation because it contains a polyfunctional monomer such as for example triallylisocyanurate and triallylcyanurate. By cross linking, mechanical strength of the composition at a temperature above a glass transition temperature of the polyetherimide or a melting point of the fluororesin and solvent resistance at high temperature are greatly improved. Also, the abrasion resistance of the composition is slightly improved.

The polyetherimide has an average molecular weight of from 10,000 to 50,000, preferably from 25,000 to 40,000. The fluororesin has an average molecular weight of from 10,000 to 80,000, preferably from 10,000 to 30,000.

The weight ratio of the polyetherimide to the fluororesin is from 20:1 to 1:1 in view of the abrasion resistance and processability during mixing.

The present invention will be illustrated by the following Examples.

Examples 1-5 and Comparative Examples 1-6

A sheet made of a resinous composition as shown in Table 1 was prepared and irradiated by electron beam at a dose of 20 Mrad and subjected to the rubbing abrasion test and a thermal deformation test at 330 °C according to JIS C 3005. A sheet made of a single resin shown in Table 1 was also prepared and subjected to the same tests as described above. The results are shown in Table 1.

In Examples 1 to 5, the thermal deformation ratio was less than 70 %, which confirmed the cross linking of the resinous compositions. In Comparative Examples 1 to 6, the thermal deformation ratio was 100 % in all the cases. The cross linked resinous compositions of the present invention had better abrasion resistance than the uncrosslinked resins of Comparative Examples.

Table 1

| Resin | Example No. 1 | 2 | 3 | 4 | 5 | Comparative Example No. 1 | 2 | 3 | 4 | 5 | 6 |
|---|---|---|---|---|---|---|---|---|---|---|---|
| Ultem 1000 | 70 | 70 | 70 | 70 | 70 | 100 | 70 | 70 | 70 | 70 | 70 |
| ETFE*1) | 30 | | | | | | 30 | | | | |
| ECTFE*2) | | 30 | | | | | | 30 | | | |
| CTFE*3) | | | 30 | | | | | | 30 | | |
| FEP*4) | | | | 30 | | | | | | 30 | |
| PFA*5) | | | | | 30 | | | | | | 30 |
| Triallylisocyanurate | 2 | 2 | 2 | 2 | 2 | 2 | 2 | 2 | 2 | 2 | 2 |
| Electron beam dose (Mrad) | 20 | 20 | 20 | 20 | 20 | 20 | 0 | 0 | 0 | 0 | 0 |
| Thermal deformation (%) | 61 | 43 | 51 | 59 | 66 | 100 | 100 | 100 | 100 | 100 | 100 |
| Abrasion resistance (strokes) | 268 | 257 | 134 | 158 | 138 | 80 | 225 | 189 | 109 | 131 | 122 |

Note: *1) Aflon COP 88 manufactured by Asahi Glass.
*2) HALAR manufactured by Central Glass.
*3) Daiflon M 300 P manufacture by Daikin Industries.
*4) Neoflon NP-20 manufactured by Daikin Industries.
*5) Neoflon AP-210 manufactured by Daikin Industries.

Examples 6 - 10 and Comparative Examples 7 - 12

An insulating wire was produced by using a resinous composition as shown in Table 2 and irradiated by electron beam at a dose of 20 Mrad and subjected to the rubbing abrasion test and a thermal deformation test at 330 °C according to JIS C 3005. An insulating wire was produced by using a single resin shown in Table 2 and subjected to the same tests as described above. The results are shown in Table 2.

In the Examples, the thermal deformation ratio was less than 70 %, which confirmed the cross linking of the resinous compositions. In Comparative Examples 7 to 12, the thermal deformation ratio was 100 % in all the cases. The cross linked resinous compositions of the present invention had better abrasion resistance

than the uncrosslinked resins of comparative Examples.

Table 2

| Resin | Example No. | | | | | Comparative Example No. | | | | | |
|---|---|---|---|---|---|---|---|---|---|---|---|
| | 6 | 7 | 8 | 9 | 10 | 7 | 8 | 9 | 10 | 11 | 12 |
| Ultem 1000 | 70 | 70 | 70 | 70 | 70 | 100 | 70 | 70 | 70 | 70 | 70 |
| ETFE*1) | 30 | | | | | | 30 | | | | |
| ECTFE*2) | | 30 | | | | | | 30 | | | |
| CTFE*3) | | | 30 | | | | | | 30 | | |
| FEP*4) | | | | 30 | | | | | | 30 | |
| PFA*5) | | | | | 30 | | | | | | 30 |
| Triallylisocyanurate | 2 | 2 | 2 | 2 | 2 | 2 | 2 | 2 | 2 | 2 | 2 |
| Electron beam dose (Mrad) | 20 | 20 | 20 | 20 | 20 | 20 | 0 | 0 | 0 | 0 | 0 |
| Thermal deformation (%) | 55 | 48 | 44 | 62 | 60 | 100 | 100 | 100 | 100 | 100 | 100 |
| Abrasion resistance (strokes) | 285 | 215 | 166 | 135 | 178 | 93 | 248 | 199 | 151 | 113 | 152 |

Notes: See Notes for Table 1.

## Claims

**1.** A molded article made of a resinous composition comprising a polyetherimide which comprises repeating units of the formula:

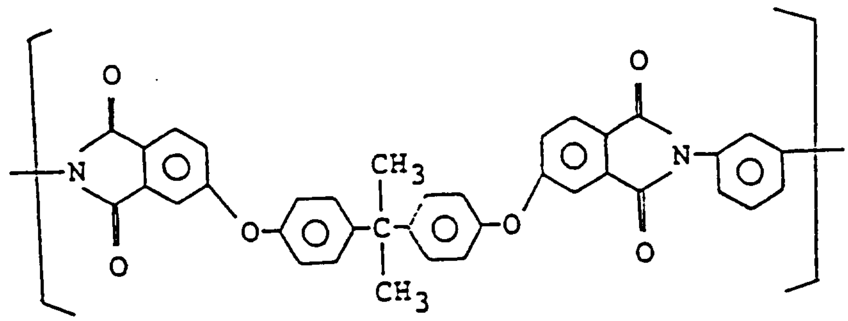

(I)

and at least one fluororesin selected from the group consisting of ethylene-tetrafluoroethylene copolymers, ethylenechlorotrifluoroethylene copolymers, tetrafluoro-ethylenehexafluoropropylenecopolymers, polychlorotrifluoroethylene and tetrafluoroethylene-perfluoroalkyl vinyl ether copolymers, wherein the average molecular weight of the polyetherimide is from 10000 to 50000, and of the fluororesin from 10000 to 80000, and the weight ratio of the polyetherimide to the fluororesin is from 20:1 to 1:1, and which contains a polyfunctional monomer and has been irradiated by ionizing radiation.

2. An insulated wire comprising a conductor and an insulating coating made of a resinous composition according to claim 1.

## Patentansprüche

1. Formgegenstand aus einer Harzzusammensetzung, die ein Polyetherimid, das wiederkehrende Einheiten der Formel umfaßt:

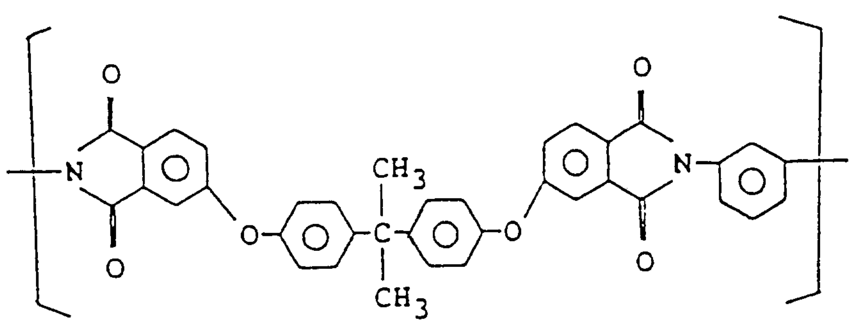

(I)

und mindestens ein Fluorharz enthält, ausgewählt aus der Gruppe, bestehend aus Ethylen-Tetrafluorethylen-Copolymeren, Ethylen-Chlortrifluorethylen-Copolymeren, Tetrafluorethylen-Hexafluorpropylen-Copolymeren, Polychlortrifluorethylen und aus TetrafluorethylenPerfluoralkylvinylether-Copolymeren, worin das Durchschnittsmolekulargewicht des Polyetherimids 10000 bis 50000 und des Fluorharzes 10000 bis 80000 sowie das Gewichtsverhältnis des Polyetherimids zum Fluorharz 20:1 bis 1:1 betragen, wobei die Zusammensetzung ein polyfunktionelles Monomer enthält und mit ionisierender Strahlung bestrahlt worden ist.

2. Isolierter Draht, umfassend einen Leiter sowie einen isolierenden Überzug aus einer Harzzusammensetzung gemäß Anspruch 1.

## Revendications

1. Article moulé fait d'une composition résineuse comprenant un polyétherimide qui comprend des motifs de formule:

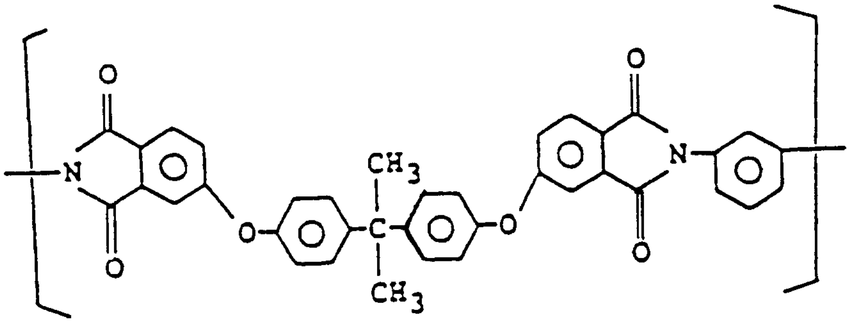

(I)

et au moins une résine fluorée choisie dans le groupe formé par les copolymères éthylène-tétrafluoroéthylène, les copolymères éthylène-chlorotrifluoroéthylène, les copolymères tétrafluoroéthylène-hexafluoropropylène, le polychlorotrifluoroéthylène et les copolymères tétrafluoroéthylène-éther vinylique de perfluoroalkyle, dans lequel la masse moléculaire moyenne du polyétherimide est de 10000 à 50000, et de la résine fluorée de 10000 à 80000, et le rapport pondéral du polyétherimide à la résine fluorée est de 20:1 à 1:1, et qui contient un monomère polyfonctionnel et qui a été irradié à l'aide d'un rayonnement ionisant.

2. Fil isolé comprenant un conducteur et un revêtement d'isolation fait d'une composition résineuse selon la revendication 1.

Fig.